Europäisches Patentamt

European Patent Office

Office européen des brevets

(19)

(11) EP 0 708 118 B1

(12) FASCICULE DE BREVET EUROPEEN

(45) Date de publication et mention
de la délivrance du brevet:
**02.06.1999 Bulletin 1999/22**

(51) Int Cl.6: **C08F 214/18**

(21) Numéro de dépôt: **95202712.6**

(22) Date de dépôt: **10.10.1995**

(54) **Utilisation de copolymères fluorés comme revêtement protecteur**

Verwendung von Fluorcopolymeren als Schutzbeschichtungsmittel

Use of fluorinated copolymers as protective coating

(84) Etats contractants désignés:
**BE DE FR GB IT NL**

(30) Priorité: **14.10.1994 FR 9412281**

(43) Date de publication de la demande:
**24.04.1996 Bulletin 1996/17**

(73) Titulaire: **ELF ATOCHEM S.A.**
**92800 Puteaux, Hauts-de-Seine (FR)**

(72) Inventeur: **Kappler, Patrick**
**F-69130 Ecully (FR)**

(56) Documents cités:
**FR-A- 2 015 217**

• **POLYMER SCIENCE U.S.S.R.,Vol.18, pages 3073-3083, 1976, PERGAMON PRESS Pub. Ye.L. GAL'PERIN et al.: "the melting temperature and the structure of fluorine containing polymers"; & Vysokomol. Soyed., A18, 12, pages 2691-2699, 1976.**

## Description

L'invention a pour objet l'utilisation des copolymères fluorés comme revêtements protecteurs de substrats divers, par exemple sous forme de vernis et peintures de substrats métalliques, de verre, bois, etc. ou sous forme de films ou gaines extrudés ou coextrudés, à tenue thermique améliorée, c'est-à-dire dont la température de fusion est supérieure ou égale à 210°C.

Les homopolymères et copolymères fluorés sont connus pour leur bonne tenue thermique, leur résistance chimique, notamment aux solvants, résistance aux intempéries et aux rayonnements, (UV, etc.), leur imperméabilité aux gaz et aux liquides, leur qualité d'isolants électriques. Les polymères fluorés de température de fusion supérieure à environ 170°C présentent néanmoins l'inconvénient d'être en général très peu solubles, voire insolubles dans les solvants polaires organiques usuels (acétates, cétones).

Par rapport à d'autres polymères fluorés de la littérature, les copolymères fluorés à base de trifluoroéthylène (VF3) et de tétrafluoroéthylène ($C_2F_4$) mis en oeuvre par la demanderesse présentent à la fois une température de fusion élevée (cf. Polymer Science, 1976, vol. 18, p. 3073-3083) et une bonne solubilité dans les solvants polaires organiques sans que leur viscosité en solution dans ce type de solvant, notamment pour des solutions d'extrait sec supérieur à 10 % en poids ne soit trop élevée. A titre d'exemple de solvants polaires organiques, on peut notamment citer les acétates de méthyle, isopropyle, butyle, l'acétone la méthyléthylcétone, la méthylisobutylcétone, le tétrahydrofurane, le diméthylformamide, le diméthylacétamide.

Outre les propriétés énoncés ci-dessus, les copolymères mis en oeuvre selon l'invention possèdent également un indice de réfraction faible, une bonne souplesse (module de rigidité compris entre 150 et 350 MPa) et une viscosité ainsi qu'une transparence après étirement.

Les copolymères mis en oeuvre dans l'invention sont à base de trifluoroéthylène (VF3) et de tétrafluoroéthylène ($C_2F_4$) et sont constitués de :

1. de 96 à 70 % (molaire) de trifluoroéthylène (VF3),
2. de 4 à 30 % (molaire) de tétrafluoroéthylène ($C_2F_4$).

Leur masse moléculaire moyenne en nombre $\overline{Mn}$ est généralement comprise entre 40.000 et 250.000 et leur polydispersité $\overline{Mw}/\overline{Mn}$ entre 1,7 et 2,9.

Ils peuvent être préparés selon les techniques de polymérisation mises en oeuvre pour la synthèse des polyoléfines fluorées. On peut citer la polymérisation en émulsion, en suspension ou en solution en présence d'initiateur (s) de polymérisation de préférence radicalaire(s), tels que les percarbonates, les perpivalates ou le persulfate de potassium.

La polymérisation s'effectue en général sous une pression comprise entre 10 et 90 bars et la température de polymérisation est en général comprise entre 40 et 120 °C, et de préférence entre 50 et 90 °C.

La polymérisation en émulsion nécessite l'utilisation d'un agent émulsifiant que l'on peut choisir par exemple parmi les émulsifiants fluorés de formule $C_nF_{2n+1}COOM$ ou $C_nF_{2n+1}C_2H_4SO_3M$ où M représente le cation sodium, potassium ou ammonium.

La polymérisation en suspension nécessite l'utilisation d'un colloïde protecteur, en général choisi parmi les alcools polyvinyliques ou les dérivés cellulosiques.

Pour préparer les vernis et peintures destinés notamment à la protection de circuits électriques contre la corrosion, on procède à la mise en solution ou en émulsion des copolymères décrits ci-dessus dans un solvant organique ou éventuellement à leur mise en dispersion en milieu aqueux pour la réalisation de peintures en phase aqueuse. Les copolymères peuvent être utilisés seuls ou en association avec d'autres polymères fluorés ou non, tels que le polyfluorure de vinylidène (PVDF), les polymères acryliques, par exemple polyméthylméthacrylate (PMMA), etc.

Les copolymères mis en oeuvre peuvent également être extrudés, coextrudés à des températures comprises entre 250 et 300 °C. On peut ainsi réaliser des revêtements protecteurs en forme de gaines ou manchons (revêtement d'objets cylindriques, câbles, fils, fibres), de films mono- ou multicouches (revêtements d'objets plats).

Grâce à leur faible indice de réfraction, une application particulièrement avantageuse des copolymères concerne leur utilisation dans le domaine des fibres optiques où ils peuvent être utilisés soit sous forme de vernis ou peintures ou soit sous forme de gaine extrudée comme revêtement protecteur du coeur des fibres optiques.

Par rapport aux autres polymères fluorés utilisés comme revêtements protecteurs de fibres optiques, les copolymères selon l'invention présentent l'avantage supplémentaire d'une tenue thermique fortement améliorée.

Pour les polymères synthétisés dans les exemples suivants, les masses moléculaires ont été déterminées par chromatographie en phase gazeuse dans le THF à température ambiante avec un détecteur réfractométrique. Les masses moléculaires en nombre $\overline{Mn}$ et en poids $\overline{Mw}$ sont exprimées en équivalent polystyrène. Les proportions des différents monomères ont été confirmées par RMN et sont exprimées en % molaire.

On mesure leur viscosité Brookfield en solution à 12 ou 20 % en poids dans l'acétate de méthyle ; les résultats sont indiqués en Pa.s.

Leur température de fusion Tf est mesurée par DSC (calorimétrie différentielle) avec une montée en température de 10 °C/min.

On apprécie également qualitativement la transparence de ces polymères après étirement uniaxial de 200 %. On moule des bandes de polymères de 0,7 mm d'épaisseur que l'on étire ensuite jusqu'à 2 fois leur longueur initiale. La transparence des échantillons est appréciée à l'oeil.

Les résultats des mesures décrites ci-dessus pour les polymères des exemples 1 à 8 sont réunis dans le Tableau 1.

## EXEMPLE 1

Dans un autoclave de 3,3 1 muni d'un agitateur, d'une double enveloppe et d'un système de régulation de la température, on introduit :

| | |
|---|---|
| eau désionisée | 2 l |
| persulfate de potassium | 0,5 g |
| acétate de sodium | 0,3 g |
| paraffine | 8 g |
| agent émulsifiant ($C_6F_{13}C_2H_4SO_3K$) | 2,45g |

Après élimination de l'oxygène de l'air, on introduit 150 g de VF3 et 23 g de $C_2F_4$ et porte la température de l'autoclave à 80 °C. La pression est maintenue à 24 bars par introduction d'un mélange gazeux de VF3 et de $C_2F_4$ de composition molaire 90/10. On ajoute alors 2,5 ml d'acétate d'éthyle après ajout de 100 g de mélange VF3/$C_2F_4$ puis 1.057 g du mélange gazeux VF3/$C_2F_4$ précédent puis abaisse la température de l'autoclave à 30 °C avant de procéder au dégazage de l'autoclave.

On forme un latex d'extrait sec élevé (36,8 %) que l'on coagule par congélation puis lave 3 fois avec 3 1 d'un mélange eau/méthanol de composition pondérale 75/25. Une fois lavé, le latex est séché à 90 à °C et on récupère 1.031 g de copolymère VF3/$C_2F_4$ sous forme de poudre dont la composition molaire est 90/10.

Le copolymère obtenu est soluble dans l'acétate de butyle.

Son module d'élasticité en flexion mesuré selon la norme ISO 12086/2 est égal à 250 MPa et sa viscosité, mesurée à l'aide d'un rhéomètre capillaire à 300 °C pour un cisaillement de 100 s$^{-1}$, est égale à 900 Pa.s.

On mesure son indice de réfraction de la manière suivante : après broyage cryogénique d'un échantillon de polymère à une granulométrie inférieure à 10 µm (les bords des particules broyées doivent être nets et non déchiquetés), on compare à l'aide d'un microscope optique son indice de réfraction avec ceux de solvants d'indice connu dans lequel il est immergé. L'éthanol et l'isopropanol ont été utilisés comme solvants-références. L'indice de réfraction est égal à 1,372±0,003.

## EXEMPLE 2

Dans un autoclave de 3,3 l muni d'un agitateur, d'une double enveloppe et d'un système de régulation de la température, on introduit :

| | |
|---|---|
| eau désionisée | 2 l |
| persulfate de potassium | 0,4 g |
| acétate de sodium | 0,3 g |
| paraffine | 8 g |
| agent émulsifiant ($C_6F_{13}C_2H_4SO_3K$) | 2,45g |

Après élimination de l'oxygène de l'air, on porte la température à 82 °C et introduit 150 g d'un mélange VF3/$C_2F_4$ de composition molaire 80/20 de manière à atteindre une pression de 24 bars. Après introduction de 99 g de mélange gazeux de VF3/$C_2F_4$ de composition molaire 80/20, on ajoute alors 1 ml d'acétate d'éthyle et continue à ajouter 690 g du mélange VF3/$C_2F_4$ précédent. On abaisse la température de l'autoclave à 30 °C avant de procéder au dégazage de l'autoclave.

On forme un latex d'extrait sec élevé (31 %) que l'on coagule par congélation puis lave 3 fois avec 3 l d'un mélange eau/méthanol de composition pondérale 75/25. Une fois lavé, le latex est séché à 90 °C et on récupère 895 g de copolymère VF3/$C_2F_4$ sous forme de poudre dont la composition molaire est 80/20. Le copolymère obtenu est soluble dans l'acétate de butyle.

Son module d'élasticité en flexion mesuré selon la norme ISO 12086/2 est égal à 250 MPa et sa viscosité, mesurée à l'aide d'un rhéomètre capillaire à 300 °C pour un cisaillement de 100 s$^{-1}$, est égale à 900 Pa.s.

## EXEMPLE 3 à 8 (comparatifs)

### EXEMPLE 3

correspond à un homopolymère de VF2 commercialisé par ELF ATOCHEM S.A. sous la dénomination commerciale KYNAR® 1.000.

### EXEMPLE 4

Dans un autoclave de 3,3 l muni d'un agitateur, d'une double enveloppe et d'un système de régulation de la température, on introduit :

| | |
|---|---|
| eau désionisée | 1,3 l |
| acétate d'éthyle | 5 ml |
| acétate de sodium | 0,073 g |
| paraffine | 8 g |
| agent émulsifiant (C$_6$F$_{13}$C$_2$H$_4$SO$_3$K) | 2,45 g |
| VF3 | 1.200 g |

Après chauffage de l'autoclave à 83 °C, on introduit 0,08 g de persulfate de potassium et 100 g d'eau désionisée. On ajuste la pression à 85 bars par ajout de 90 g d'eau. Afin de compenser la baisse de pression due à la polymérisation du VF3, on ajoute encore de l'eau. Après ajout de 780 g d'eau et 0,08 g de persulfate de potassium introduit en 4 fois à raison d'une injection par heure, on abaisse la température de l'autoclave à 40 °C avant de procéder à son dégazage.

On forme un latex d'extrait sec élevé (29 %) que l'on coagule par congélation puis lave 3 fois avec 3 l d'un mélange eau/méthanol de composition pondérale 75/25. Une fois lavé, le latex est séché à 90 °C et on récupère 975 g d'homopolymère de VF3 sous forme de poudre.

Le copolymère obtenu est soluble dans l'acétate de butyle.

### EXEMPLE 5

correspond à un polymère de VF2 et de C$_2$F$_4$ commercialisé par ELF ATOCHEM N.A. sous la dénomination commerciale KYNAR® SL.

### EXEMPLE 6

Dans un autoclave de 3,3 l muni d'un agitateur, d'une double enveloppe et d'un système de régulation de la température, on introduit 1.400 g d'eau désionisée puis 39,5 ml d'une solution à 1 % en poids d'hydroxyéthylcellulose. Après désaération de l'autoclave, on introduit 5 g de C$_2$F$_3$Cl, 1.062 g de VF3 et 12 ml d'acétate d'éthyle.

Après chauffage de l'autoclave à 50 °C, on introduit 760 g d'eau désionisée et 3 g de perdicarbonate de cyclohexyle dissout dans 52 g de CCl$_2$FCH$_3$ (FORANE® 141 b). La pression au sein de l'autoclave est alors de 85 bars ; elle est maintenue à cette valeur par ajout d'eau ; on ajoute également C$_2$F$_3$Cl, introduit par fractions de 8g en même temps que 25 g d'eau. En 4 h de copolymérisation, ont été ajoutés 400 g d'eau et 112 g de C$_2$F$_3$Cl.

Après refroidissement de l'autoclave, on procède au dégazage des monomères résiduaires puis à la vidange du contenu de l'autoclave qui est filtré et séché.

On récupère 814 g de copolymère VF3/C$_2$F$_3$Cl sous forme de poudre dont la composition molaire est 90/10.

### EXEMPLE 7

Dans un autoclave de 3,3 l muni d'un agitateur, d'une double enveloppe et d'un système de régulation de la température, on introduit :

| eau désionisée | 1.400 g |
|---|---|
| acétate de sodium | 0,073 g |
| paraffine | 8 g |
| agent émulsifiant ($C_6F_{13}C_2H_4SO_3K$) | 2,45 g |
| VF3 | 1.022 g |
| $C_3F_6$ | 208 g |
| acétate d'éthyle | 28 ml |

Après chauffage de l'autoclave à 83 °C, on introduit 16 ml d'une solution de persulfate de potassium de concentration massique 0,5 %. On ajuste la pression à 85 bars par ajout de 90 g d'eau. Afin de compenser la baisse de pression due à la copolymérisation, on ajoute encore de l'eau (700 g). On procède ensuite au dégazage de l'autoclave.

On forme un latex d'extrait sec élevé (27 %) que l'on coagule par congélation puis lave 3 fois avec 3 l d'un mélange eau/méthanol de composition pondérale 75/25. Une fois lavé, le latex est séché à 90 à °C et on récupère 871 g de copolymère VF3/$C_3F_6$ sous forme de poudre dont la composition molaire est 99/1.

Le copolymère obtenu est soluble dans l'acétate de butyle.

## EXEMPLE 8

Dans un autoclave de 3,3 l muni d'un agitateur, d'une double enveloppe et d'un système de régulation de la température, on introduit après désaération :

| eau désionisée | 1.400 g |
|---|---|
| acétate d'éthyle | 5 ml |
| acétate de sodium | 0,073 g |
| paraffine | 8 g |
| agent émulsifiant ($C_6F_{13}C_2H_4SO_3K$) | 2,45 g |
| VF3 | 1.132 g |
| VF2 | 98 g |

Après chauffage de l'autoclave à 83 °C, on introduit 16 ml d'une solution de persulfate de potassium de concentration massique 0,5 %. On ajuste la pression à 80 bars par ajout de 80 g d'eau. Afin de compenser la baisse de pression due à la copolymérisation, on ajoute encore de l'eau (854 g). On procède ensuite au dégazage de l'autoclave.

On forme un latex d'extrait sec élevé (27 %) que l'on coagule par congélation puis lave 3 fois avec 3 l d'un mélange eau/méthanol de composition pondérale 75/25. Une fois lavé, le latex est séché à 90 à °C et on récupère 963 g de copolymère VF3/VF2 sous forme de poudre dont la composition molaire est 90/10.

Tableau 1

| Ex | Monomères | proportions molaires | Tf (°C) | $\overline{Mn}$ | $\overline{Mw}/\overline{Mn}$ | viscosité Brookfield (Pa.s) | % de polymère en solution | Transparence après étirement uniaxial de 200 % |
|---|---|---|---|---|---|---|---|---|
| 1 | VF3/C$_2$F$_4$ | 90/10 | 219 | 82.000 | 1,9 | 2,65 | 20 | rupture avant 200 % |
| 2 | VF3/C$_2$F$_4$ | 80/20 | 232 | 96.000 | 2,4 | 7,30 | 12 | transparent |
| 3 | VF2 | 100 | 170 | | | | | |
| 4 | VF3 | 100 | 204 | 83.000 | 2,2 | 6,75 | 20 | peu transparent |
| 5 | VF2/C$_2$F$_4$ | 80/20 | 120 | | | | | transparent |
| 6 | VF3/C$_2$F$_3$Cl | 90/10 | 193 | | | | | |
| 7 | VF3/C$_3$F$_6$ | 99/1 | 187 | 100.000 | 2,1 | 10,40 | 20 | transparent |
| 8 | VF3/VF2 | 90/10 | 191 | 146.000 | 1,9 | 62,00 | 20 | |

EP 0 708 118 B1

## EXEMPLE 9

En reprenant les conditions opératoires de l'exemple 1, on prépare un copolymère VF3/$C_2F_4$ dont la composition molaire est 95/5 et la masse moléculaire moyenne en nombre $\overline{Mn}$ est égale à 170.000.

## EXEMPLE 10 Préparation d'un vernis

On prépare une solution d'extrait sec 20 % et de viscosité Brookfield égale à 0,8 Pa.s en dissolvant le copolymère pulvérulent obtenu à l'exemple 9 dans l'acétate de butyle .

Puis on fabrique un vernis à partir de cette solution et d'un copolymère constitué de 70 % en poids de méthacrylate de méthyle et de 30 % d'acrylate d'éthyle ($\overline{Mn}$ 27.000 ; $\overline{Mw}$ 93.000) commercialisé par la Société Rohm & Haas sous la dénomination B44 en mélangeant :

* 58,3g de la solution du copolymère VF3/$C_2F_4$ de l'exemple 9 en solution dans l'acétate de butyle
* 25 g de solution de B44 dans l'acétate de butyle (extrait sec 20 %)
* 25 g d'acétate de butyle.

L'extrait sec du vernis est de 15,4 %.

## Utilisation de copolymère VF3/$C_2F_4$ dans un vernis

A l'aide d'un raclet spirale de 150 µm, on dépose sur une plaque d'aluminium chromatée le vernis décrit précédemmment.

Afin de tester son aptitude à être utilisé comme vernis de retouche, il est également déposé sur une plaque d'aluminium déjà revêtue de peinture blanche à base de PVDF.

A titre comparatif, on utilise un vernis de retouche contenant les mêmes proportions de copolymère fluoré, de B44 et de solvant mais le copolymère fluoré a été remplacé par un terpolymère qui comprend 72 % en moles de VF2, 18 % de $C_2F_4$ et 10 % de $C_3F_6$ et dont le point de fusion est 90 °C.

Les plaques ainsi revêtues sont séchées, soit pendant 30 min à 80 °C, soit 1 semaine à température ambiante.

Dans le tableau 2 sont répertoriés les résultats des mesures d'adhérence , résistance au choc, brillant, etc des vernis décrits ci-dessus.

Le brillant sur fond blanc à 20° est mesuré selon la norme ASTM D 523-85.

L'adhérence est évaluée selon la norme NFT 30-038.

La dureté Persoz est mesurée selon la norme NFT 30-016.

La résistance au choc est exprimée en mètres pour un poids de 1 kg.

La résistance à la pliure est mesurée selon la norme ISO 3270.

La rétention de brillant au QUV est mesurée selon la norme ASTM 523-85.

Tableau 2

| Test/mesure | Vernis exemple 10 | Vernis comparatif |
|---|---|---|
| aspect en pot | excellent | excellent |
| aspect du film | excellent | excellent |
| épaisseur film sec | 14 µm±2 | 9 µm±2 |
| brillant sur fond blanc 20° | 53,2 %±1 | 62,1 %±1 |
| adhérence sur Al chromaté | excellente | excellente |
| adhérence sur Al revêtu PVDF blanc | excellente | excellente |
| dureté Persoz | 272 | 231 |
| résistance au choc | >1 m | >1 m |
| pli | excellente | excellente |
| rétention de brillant au QUV après 1.000h | 100 % | 100 % |

### Utilisation de copolymère VF3/C$_2$F$_4$ comme matériau ultrasouple

(Les matériaux ultra-souples peuvent être utilisés pour réaliser notamment des gaines primaires ou secondaires, des plaques et/ou des embouts déformables.)

Le copolymère de l'exemple 2 est moulé à 250 °C sous forme de plaque de 0,7 mm d'épaisseur. On mesure ses propriétés mécaniques en traction selon la norme ASTM D 1708 :

| | |
|---|---|
| contrainte à la rupture | 15,4 MPa |
| allongement à la rupture | 513 % |
| module d'élasticité | 250 MPa |

On mesure la résistance au choc à froid (-30 °C) de différents polymères fluorés selon l'invention (exemples 1, 2 et 9), d'un PVDF (point de fusion 170 °C ; $\overline{Mw}$ 285.000) commercialisé par la demanderesse sous la dénomination KYNAR ® 1000 et d'un PVF3 (point de fusion 199 °C ; $\overline{Mw}$ 280.000)

Les résultats sont réunis dans le tableau 3.

Tableau 3

| Nature du polymère | choc Izod (en J/m) |
|---|---|
| PVDF | 40 |
| PVF3 | 60 |
| VF3/C$_2$F$_4$ exemple 9 | 280 |
| VF3/C$_2$F$_4$ exemple 1 | 200 |
| VF3/C$_2$F$_4$ exemple 2 | 180 |

**Revendications**

1. Utilisation d'un ou plusieurs copolymères fluorés à tenue thermique améliorée à base

    1. de 96 à 70 % (molaire) de trifluoroéthylène (VF3),
    2. de 4 à 30 % (molaire) de tétrafluoroéthylène (C$_2$F$_4$) comme revêtements protecteurs de substrats et/ou de matériaux ultra-souples.

2. Utilisation d'un ou plusieurs copolymères fluorés selon la revendication 1 sous forme de vernis et/ou peintures en phase organique ou aqueuse.

3. Utilisation d'un ou plusieurs copolymères fluorés selon la revendication 1 sous forme de films, gaines ou manchons mono- ou multicouches obtenus par extrusion ou coextrusion.

4. Utilisation d'un ou plusieurs copolymères fluorés selon les revendications 1 à 3 pour le revêtement de circuits électriques.

5. Utilisation des copolymères fluorés selon les revendications 1 à 3 pour le revêtement de fibres optiques.

**Claims**

1. Use of one or more fluorinated copolymers with improved thermal behaviour based

    1. on 96 to 70% (molar) of trifluoroethylene (VF3),
    2. on 4 to 30% (molar) of tetrafluoroethylene (C$_2$F$_4$)

as protective coatings for ultraflexible materials and/or substrates.

2. Use of one or more fluorinated copolymers according to Claim 1 in the form of varnishes and/or paints in the organic or aqueous phase.

3. Use of one or more fluorinated copolymers according to Claim 1 in the form of mono- or multilayer films, sheathings or sleeve tubes obtained by extrusion or coextrusion.

4. Use of one or more fluorinated copolymers according to Claims 1 to 3 for the coating of electrical circuits.

5. Use of the fluorinated copolymers according to Claims 1 to 3 for the coating of optical fibres.

**Patentansprüche**

1. Verwendung eines oder mehrerer fluorierter Copolymere mit verbesserter thermischer Widerstandsfähigkeit auf Basis von

    1. 96 bis 70 Mol-% Trifluorethylen (VF3),
    2. 4 bis 30 Mol-% Tetrafluorethylen ($C_2F_4$)

als Schutzbeschichtungen für Substrate und/oder ultraweiche Beschichtungen.

2. Verwendung eines oder mehrerer fluorierter Copolymere nach Anspruch 1 in Form von Lacken oder Farben in wäßriger oder organischer Phase.

3. Verwendung eines oder mehrerer fluorierter Copolymere nach Anspruch 1 in Form von ein- oder mehrschichtigen Filmen (Folien), Ummantelungen oder Hülsen, erhalten durch Extrusion oder Coextrusion.

4. Verwendung eines oder mehrerer fluorierter Copolymere nach den Ansprüchen 1 bis 3 zur Beschichtung von elektrischen Schaltungen.

5. Verwendung der fluorierten Copolymere nach den Ansprüchen 1 bis 3 zur Beschichtung von Lichtleitfasern (Lichtwellenleitern).